# EUROPEAN PATENT APPLICATION

(11) **EP 1 569 308 A1**
(43) Date of publication of application: **31.08.2005**
(21) Application number: 03812696.7
(22) Date of filing: 02.12.2003
(51) Int. Cl.: H01S 3/10, H01S 3/067, G02B 6/26

(54) **FIBER OPTIC AMPLIFIER MODULE**

(30) Priority: 06.12.2002 JP 2002354509
(71) Applicant: CENTRAL GLASS COMPANY, LIMITED, Yamaguchi-ken 755-0001 (JP)
(72) Inventor: SAKAGUCHI, Shigeki, Office of CENTRAL GLASS COMP., Chiyoda-ku, Tokyo 101-0054 (JP); KUBOTA, Yoshinori, Office of CENTRAL GLASS COMP., Chiyoda-ku, Tokyo 101-0054 (JP)
(74) Representative: Manitz, Finsterwald & Partner GbR
(86) International application number: PCT/JP2003/015406
(87) International publication number: WO 2004/054051

(57) **Abstract**

In an optical fiber amplifier for amplifying optical signals, it is constituted of a pumping module, an amplifying fiber module, and a monitor module, an output fiber of the pumping module and an input fiber of the amplifying fiber module are connected, an output fiber of the amplifying fiber module and an input fiber of the monitor module are connected, and these modules are housed in one package to be compact. With this, it is possible to form constitutional elements of the optical fiber amplifier into modules and to provide an optical fiber amplifier of compact size, low price and high performance.

## Description

### BACKGROUND OF THE INVENTION

The present invention relates, in optical fiber amplifiers using an optical amplifying fiber as an optical amplifying medium, to a structure of an optical fiber amplifier of compact size, low price and high performance.

An optical fiber amplifier of compact size and low price is desired in order to allow the optical network to expand from the relay system toward the metro and access system.

Conventional optical fiber amplifiers have been devices for the purpose of applying an Er (erbium) doped optical fiber having an optical amplifying function in the minimum loss wavelength band of optical fiber as an amplifying medium to dense wavelength division multiplexing transmission in long-distance relay transmission system. This is used for devices that amplify multi-wavelength optical signals all together. It is high in performance and reliability, but has been high in price.

As the optical network expands from the long-distance relay system conducting dense wavelength division multiplexing transmission to the metro and access system directly connecting to subscribers, the optical fiber amplifier is expected to have a lot of uses in uses different from those of the relay system. For example, a lot of uses are expected as the optical signal amplification in an add-drop multiplexer, which drops off optical signals of a particular wavelength at a node of a network to another network and inputs optical signals of the same wavelength from that network to the original node. Therefore, there was a strong desire for the development of an optical fiber amplifier of high performance, compact size and low price. In contrast with this, optical fiber amplifiers of conventional type have almost not been suitable for a trend towards compact size and low price, due to their complicated structures and a lot of work for assembly.

Basic constitutional elements of an optical fiber amplifier are a pumping laser relative to an input fiber of optical signals, a multiplexer for multiplexing the pumping light and for inputting it into an optical amplifying fiber, a filter for splitting a part of the amplified optical signals, and a light receiver for monitoring the split optical signals.

This is equipped with an optical isolator for suppressing the return light, a gain equalizer for lowering the wavelength dependency of amplification characteristics, a demultiplexing filter for removing the pumping light and ASE light, and the like.

In conventional optical fiber amplifiers, constitutional parts such as pumping laser, isolator and multi/demultiplexer are separate parts. Input and output fibers are connected to these parts. The structure of the amplifier has been constructed by sequentially connecting these fibers. Therefore, it has been extremely difficult to make the amplifier smaller, due to the accommodation of the connection reinforcing parts and the extra length treatment between fibers to house separate parts and due to extremely many fiber connection points. The assembly has necessarily been complicated, and therefore achieving lower price has almost been impossible.

In contrast with this, there has been proposed a housing in which they are arranged away from each other to respectively mount portions of optical parts, in which its outer periphery is wound with EDF (Erbium Doped Fiber), in which it is equipped with a neck member, and in which an optical fiber amplifier can be arranged (see Japanese Patent Publication Hei 11-103114). However, it is shown that optical parts are still separate parts, and making modules have not been conducted. Therefore, a sufficiently compact construction has been impossible, even though the assembly steps are improved.

On the other hand, it is possible to form an optical fiber amplifier utilizing spatial optical connection using separate bulk type parts such as lens. Hitherto, however, the dimensions, performance and the like of these bulk parts have not been sufficient, and therefore it has been impossible by the spatial connection type to obtain an amplifier of sufficient performance. Recently, however, there have been developed so-called micro-optics techniques such as the forming technique of small lens by molding method and the grinding technique to directly form an optical fiber tip into a lens. These are techniques by optical spatial connection using microlens or the like and sufficiently matured techniques, as they are practically used for optical sending and receiving module and the like. By using such micro-optics techniques, there has been a trial to construct an optical amplifier by an optical waveguide formed on a substrate, in an optical amplification medium. However, optical amplification medium characteristics have not necessarily been superior, and therefore practical ones have not been developed up to now.

### SUMMARY OF THE INVENTION

It is an object of the present invention to provide an optical fiber amplifier in which constitutional elements of the optical fiber amplifier have been formed into modules and in which it has been solved in terms of compact size, low price and high performance.

The present invention provides, in an optical fiber amplifier in which an optical amplifying fiber is used as an optical signal amplifying medium and in which optical signals are amplified by multiplexing a pumping light into the optical amplifying fiber, the optical fiber amplifier being characterized in that it comprises a pumping module in which at least an optical signal input terminal, a pumping light source, a multiplexing filter for multiplexing both, and an output terminal of a multiplexed light wave are housed in one package and which is equipped with input and output fibers; an amplifying fiber module in which at least an optical amplifying fiber is housed in one package and which is equipped with input and output fibers; and a monitor module in which at least an input terminal of an amplified optical signal, an output terminal, a distribution filter for separating a part of the optical signal, a light receiver of a distributed optical signal are housed in one package and which is equipped with input and output fibers; the output fiber of the pumping module and the input fiber of the amplifying fiber module are connected; the output fiber of the amplifying fiber module and the input fiber of the monitor module are connected; and these modules are housed in one package.

### BRIEF DESCRIPTION OF THE DRAWINGS

Fig. 1 is a constitutional example of a conventional optical fiber amplifier. A solid line represents a connection by optical fiber, and a broken line represents a connection by electric circuit.
Fig. 2 is a view showing a constitution of an optical fiber amplifier of the present invention.
Fig. 3 is a view showing a constitution of a pumping module of the present invention, the upper being a plan view and the lower being a side view.
Fig. 4 is a view showing a constitution of a monitor module of the present invention, the upper being a plan view and the lower being a side view.
Fig. 5 is a view showing a constitution of an optical fiber amplifier module of the present invention, the upper being a plan view and the lower being a side view.

### DESCRIPTION OF THE PREFERRED EMBODIMENTS

It becomes possible by the present invention to provide an optical fiber amplifier module of compact size, low price and high performance.

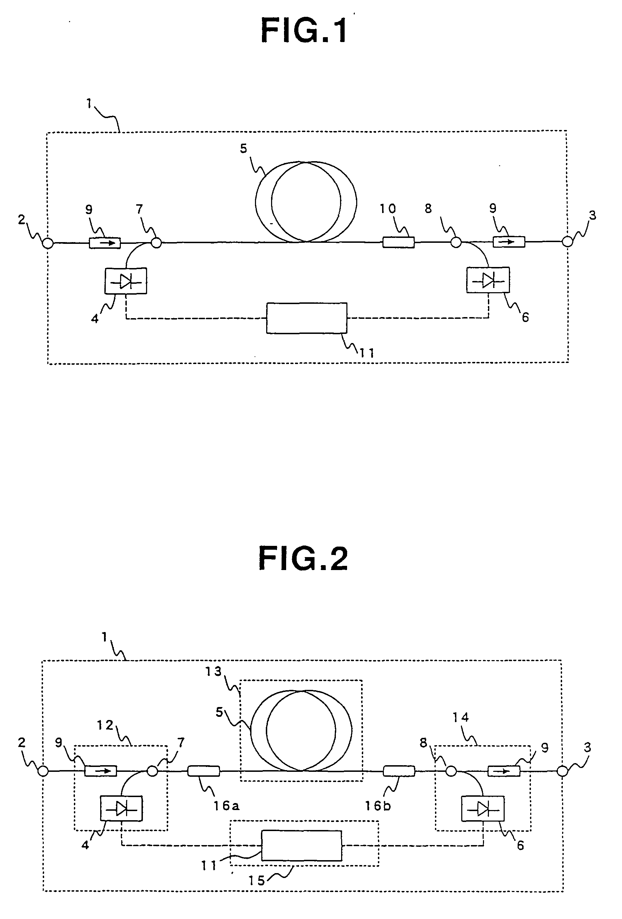

Reference numerals in Figs. 1-5 respectively represent the following members.
1: optical fiber amplifier
2: optical signal input terminal
3: optical signal output terminal
4: pumping LD
5: optical amplifying fiber
6: light receiving LD
7: multiplexing filter
8: distribution filter
9: optical isolator
10: gain equalizer
11: control electronic circuit
12: pumping module
12a: lens
12b: lens
12c: sleeve
12d: output terminal
12e: signal input terminal
13: optical amplifying fiber module
14: monitor module
14a: lens
14b: lens
14c: sleeve
14d: optical signal input terminal
14e: optical signal output terminal
15: electronic module
16a and 16b: fiber connection portions
17: assembly substrate
18: electrical connector

A constitutional example of an optical fiber amplifier is shown in Fig. 1. Basic constitutional elements are optical amplifying fiber (5), pumping source (4), pumping light multiplexing filter (7), distribution filter (8), and light receiver (6). The signals of the light receiver are feed backed to the pumping source through the control electronic circuit (11). It is constituted of these, the isolator (9) and the gain equalizer (10). Furthermore, it may be furnished with a demultiplexing filter for removing the pumping light and ASE light and the like. In conventional optical fiber amplifiers, the constitutional parts are separate parts, and input and output fibers are connected to the respective separate parts. The assembly is conducted by a connection reinforcement of the input and output fibers of the respective separate parts.

Fig. 2 shows one in which an optical fiber amplifier has been formed in the form of module to have the pumping module (12), the optical amplifying fiber module (13) and the monitor module (14). In the pumping and monitor modules, various parts are housed in one package by using spatial optical connection.

Therefore, it is possible to make the module have an extremely small size. The assembly is conducted by connecting the output fiber of the pumping module with the input fiber of the amplifying module and by connecting the output fiber of the amplifying module with the input fiber of the monitor module. The connection method is preferably fusion. That is, the fiber connection portions are the minimum two points of (16a) and (16b), and it becomes possible to minimize the number of the connecting points and the extra length of fiber. Therefore, an optical fiber amplifier according to the present invention makes the assembly extremely easy, and it is possible to make the package have an extremely small size.

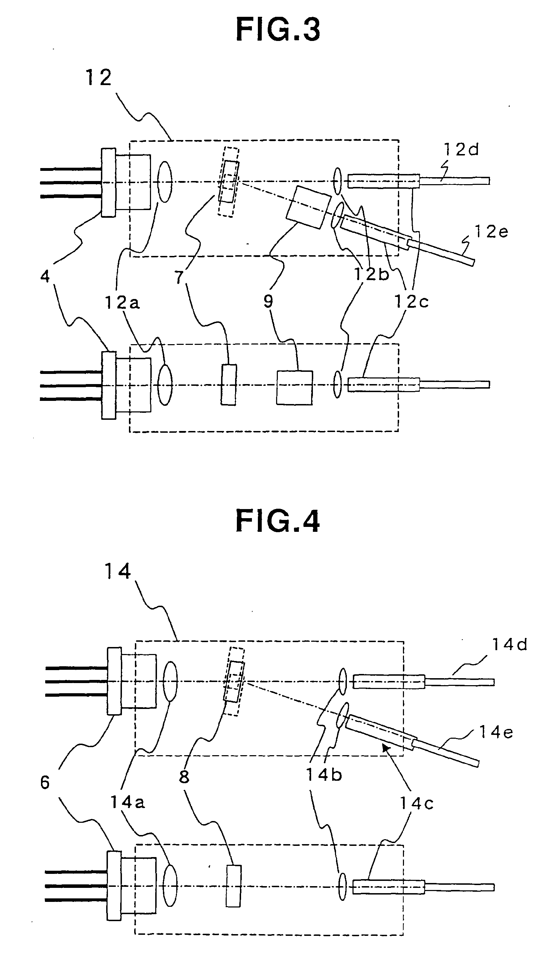

Fig. 3 shows a constitution of the pumping module. A pumping LD (4) and an output terminal (12d) constitute a primary axis, and the optical axis of an input terminal of optical signals serves as a secondary axis. These devices are fixed at predetermined positions of the package. The crossing angle between the primary axis and the secondary axis is 16 degrees. The multiplexing filter (7) is placed at the crossing point of the optical axes. The filter is formed of a dielectric multilayer film filter. The filter is mounted on a seat that is finely movable in a direction perpendicular to the primary axis. By finely moving the seat in a direction perpendicular to the primary axis, the filter position moves parallel with the primary axis direction, since the filter surface has an angle relative to the primary axis direction, as shown in a dotted line. With this, it becomes possible to finely adjust the optical axes of the primary axis and the secondary axis. It is possible to conduct the optical axis adjustment with ease and high precision by adjusting only the filter position.

In the pumping LD (4) of the present invention, it is possible to use a TO canned package product. In this case, it becomes easy to use an optimum LD corresponding to performance of optical fiber amplifier. That is, a constitution of an optical fiber amplifier having various performance characteristics becomes easily possible by changing the pumping LD (4) while using the same package.

By using a dielectric multilayer film as the multiplexing filter (7), although the loss is comparable to conventional fused fiber couplers, a multiplexing of high-precision wavelength characteristics becomes possible. Furthermore, it is possible to eliminate polarization dependency by adjusting the crossing angle to 20 degrees or less. Although less crossing angle is advantageous in reducing polarization dependency, this makes the package longer. Thus, it is practical to adjust it to 6 degrees or higher. If it becomes less than this angle, interference and the like between parts and optical axis tends to occur, and the package total length tends to become longer. That is, since polarization dependency is low like this and since it is possible to prevent reduction of receiving sensitivity and the like, measures become possible even in case that the transmission speed becomes as high as 10Gb/s or greater.

In the monitor module, the optical isolator is mounted on the secondary axis. Due to spatial optical connection, tolerance is large, and the mounting is easy.

Hitherto, there have not been pumping modules, which are based on spatial connection and in which several functions are integrated, and those of compact size as that of the present invention have not existed. Due to this, assembly of optical fiber amplifier has become extremely easy. Since the package is hermetically sealed, reliability is extremely high. It is possible to make the package have an extremely small outer shape such as about 20x30x7mm.

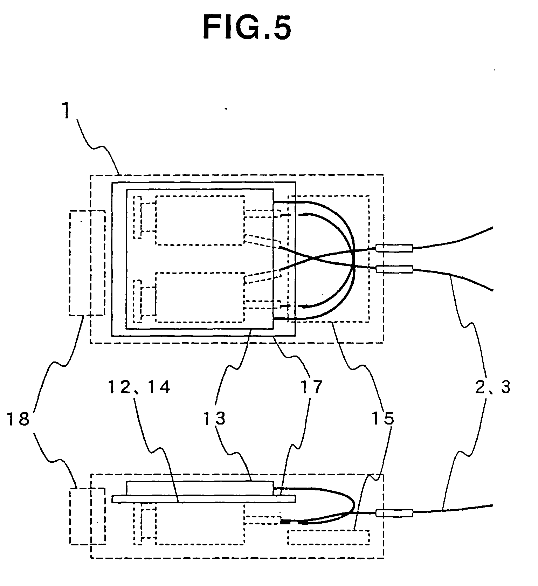

Fig. 4 shows a constitution of the monitor module. In this example, the primary axis is constituted of the light receiving PD (6) and the input terminal (14d), and the optical axis of the output terminal (14e) of optical signals serves as the secondary axis. These devices are fixed at predetermined positions of the package. The crossing angle between the primary axis and the secondary axis is, for example, 16 degrees. The distribution filter (8) is placed at the crossing point of the optical axes. The distribution filter (8) is a dielectric multilayer film filter. The filter is mounted on a seat that is finely movable in a direction perpendicular to the primary axis. By finely moving the seat in a direction perpendicular to the primary axis, the filter position moves parallel with the primary axis direction, since the filter surface has an angle relative to the primary axis direction, as shown in a dotted line. With this, it becomes possible to finely adjust the optical axes of the primary axis and the secondary axis. It is possible to conduct the optical axis adjustment with ease and high precision by adjusting only the filter position.

By using a dielectric multilayer film as the distribution filter, although the loss is comparable to conventional fused fiber couplers, a multiplexing of high-precision wavelength characteristics becomes possible. Furthermore, it is possible to eliminate polarization dependency by adjusting the crossing angle to 20 degrees or less. That is, since it is possible to prevent reduction of receiving sensitivity and the like, measures become possible even in case that the transmission speed becomes as high as 10Gb/s or greater.

The distribution filter (8) is constituted of a dielectric multilayer film. Therefore, the precision of controllability of wavelength characteristics and transmittance becomes high. The distribution rate of the amplified optical signals to the light receiving PD 6 is 2+/-0.2% in the entire region of C band.

Hitherto, there have not been monitor modules, which are based on spatial connection and in which several functions are integrated, and those of compact size as that of the embodiment of the present invention have not existed. Due to this, assembly of optical fiber amplifier has become extremely easy. Since the package is hermetically sealed, reliability is extremely high. It is possible to make the package have an extremely small outer shape such as about 20x30x7mm.

Fig. 5 shows an optical fiber amplifier constituted in accordance with the present invention. The fiber connection portions are only two positions between the pumping module (12) and the optical amplifying fiber module (13) and between the optical amplifying fiber module (13) and the monitor module (14). Therefore, it is possible to minimize the number of the connection points and the extra length of fiber.

The optical amplifying module (13) and the pumping and monitor modules (12) and (14) are arranged by lamination.

As the optical amplifying module (13), there is used one obtained by circularly winding a fluoride amplifying fiber of a length of 60cm and doped with 0.5 mol% Er and then subjecting this to hermetic sealing with a metal-laminated film.

Although a silica-based fiber may be used for the optical amplification fiber, it is possible to achieve a comparable performance with the total length of fiber of at least one-tenth or less by using fluoride optical fiber that can be doped with Er with higher concentration. Therefore, it can be made more compact by using fluoride optical fiber.

To make it more compact, the optical amplification module (13) is a thin member hermetically sealed with a laminated film. Since the optical amplification fiber is also housed in the form of module, its handling is extremely easy, and it can be formed into a thin package, as shown in the present embodiment. With this, since it is possible to house the optical amplification module together with the pumping and monitor modules in a two-story method, the package size of the optical fiber amplifier (1) can be reduced with respect to planar dimensions without increasing the thickness.

With this, it was possible to make the package of the optical fiber amplifier have an outer dimension of about 45x70x12mm.

With this, the outer dimension has become 1/5 to 1/2 as compared with that of a conventional amplifier like this type, and it has become possible to make it extremely compact.

Throughout C band entire region, there was obtained performances of a gain of 20dB or greater and a noise figure of 5dB or less relative to small signal input. Furthermore, the gain deviation became 2dB or less in the C band entire region without using a gain equalizer, due to the use of fluoride amplifying fiber. In this manner, it was possible to constitute an optical fiber amplifier of extremely superior performance even though it was compact in size.

According to the method of the present invention, the following advantageous effects were obtained by forming constitutional parts of the optical fiber amplifier into the pumping module, the optical amplifying module, and the monitor module. Firstly, the number of the optical fiber connection points decreased, and the extra length treatment decreased. Therefore, assembly became extremely easy. Secondly, it was possible to make the optical fiber amplifier extremely compact. Thirdly, it became possible by using a dielectric multilayer film as the filter to (1) achieve a high precision control of multi/demultiplexing characteristics and transmission characteristics and to (2) reduce polarization dependency. Fourthly, the optical axis adjustment of the secondary axis became highly precise and easy by mounting the filter on a seat that is finely movable perpendicularly to the primary axis. Fifthly, the optimum LD setting to the amplifier became easy by using the TO canned LD. As a result, it became possible to constitute an optical fiber amplifier of compact size, low price and high performance.

## Claims

1. In an optical fiber amplifier in which an optical amplifying fiber is used as an optical signal amplifying medium and in which optical signals are amplified by multiplexing a pumping light into the optical amplifying fiber, the optical fiber amplifier being **characterized in that** it comprises a pumping module in which at least an optical signal input terminal, a pumping light source, a multiplexing filter for multiplexing both, and an output terminal of a multiplexed light wave are housed in one package and which is equipped with input and output fibers; an amplifying fiber module in which at least an optical amplifying fiber is housed in one package and which is equipped with input and output fibers; and a monitor module in which at least an input terminal of an amplified optical signal, an output terminal, a distribution filter for separating a part of the optical signal, a light receiver of a distributed optical signal are housed in one package and which is equipped with input and output fibers; the output fiber of the pumping module and the input fiber of the amplifying fiber module are connected; the output fiber of the amplifying fiber module and the input fiber of the monitor module are connected; and these modules are housed in one package.

2. A pumping module according to claim 1, **characterized in that** the pumping light source, the optical signal input terminal and the multiplexing output terminal are spatially connected in the pumping module, that the pumping module is a module in which, relative to an optical axis (referred to as a primary optical axis) that joins two optical devices of these, an optical axis (referred to as a secondary optical axis) of the remaining optical device crosses at an angle of 20 degrees or less, and that the multiplexing filter placed on this crossing point is constituted of a dielectric multilayer film.

3. A pumping module according to claim 1 or claim 2, **characterized in that** each optical device and the input and output terminals are fixed at predetermined positions of a base member that houses these in the pumping module and that in the pumping module a filter device placed to have an angle that is a half relative to a crossing angle at a crossing point of a primary optical axis and a secondary axis is mounted on a seat that is finely movable in a direction perpendicular to the primary optical axis.

4. A monitor module according to claim 1, **characterized in that** optical connections of the light receiver, the input terminal of the amplified optical signals and the output terminal are conducted by spatial connections in the monitor module, that the monitor module is a module in which, relative to an optical axis (referred to as a primary optical axis) that joins two optical devices of these, an optical axis (referred to as a secondary optical axis) of the remaining optical device crosses at an angle of 20 degrees or less, and that the distribution filter placed on this crossing point is constituted of a dielectric multilayer film.

5. A monitor module according to claim 1 or claim 4, **characterized in that** each optical device and the input and output terminals are fixed at predetermined positions of a base member that houses these in the monitor module and that in the monitor module a filter device placed to have an angle that is a half relative to a crossing angle at a crossing point of a primary optical axis and a secondary axis is mounted on a seat that is finely movable in a direction perpendicular to the primary optical axis.

6. An amplifying fiber module according to claim 1, **characterized in that** the amplifying fiber module is one obtained by circularly winding an optical amplifying fiber and then subjecting this to a hermetic sealing with a laminated film having a lamination of metal and resin.

7. An optical fiber amplifier module according to claim 1, **characterized in that** the pumping module, the monitor module and the amplifying module are housed in a package in a manner to have a lamination in a direction along a thickness thereof.
